(19) Europäisches Patentamt
European Patent Office
Office européen des brevets

(11) **EP 0 983 684 B1**

(12) **FASCICULE DE BREVET EUROPEEN**

(45) Date de publication et mention
de la délivrance du brevet:
**25.02.2009 Bulletin 2009/09**

(21) Numéro de dépôt: **99910414.4**

(22) Date de dépôt: **18.03.1999**

(51) Int Cl.:
*H04N 3/15* (2006.01)    *H04N 3/08* (2006.01)

(86) Numéro de dépôt international:
**PCT/FR1999/000622**

(87) Numéro de publication internationale:
**WO 1999/049651 (30.09.1999 Gazette 1999/39)**

(54) **PERFECTIONNEMENT A L'ACQUISITION D'IMAGE PAR BALAYAGE POUSSE-BALAI**

BILDERFASSUNG MIT PUSH-BROOM-ABTASTUNG

IMPROVEMENT TO IMAGE ACQUISITION BY PUSH-BROOM SCANNING

(84) Etats contractants désignés:
**BE DE ES FR GB IT SE**

(30) Priorité: **20.03.1998   FR 9803450**

(43) Date de publication de la demande:
**08.03.2000   Bulletin 2000/10**

(73) Titulaire: **CENTRE NATIONAL D'ETUDES SPATIALES**
**75001 Paris (FR)**

(72) Inventeurs:
• **ROUGE, Bernard**
**F-31400 Toulouse (FR)**
• **MOREL, Jean-Michel**
**F-75017 Paris (FR)**

(74) Mandataire: **Texier, Christian et al**
**Cabinet Régimbeau**
**20, rue de Chazelles**
**75847 Paris cedex 17 (FR)**

(56) Documents cités:
**EP-A- 0 010 926**     **FR-A- 2 678 460**
**FR-A- 2 737 375**     **GB-A- 2 191 058**

EP 0 983 684 B1

## Description

La présente invention est relative à l'acquisition d'une image d'observation satellitaire de la terre par balayage "pousse-balai" (Push-broom selon la terminologie anglo-saxonne généralement utilisée) à partir d'une ou plusieurs barrettes (ou matrice(s)) de détecteurs de type à transfert de charge (CCD) défilant en regard d'une zone observée.

DOMAINE DE L'INVENTION

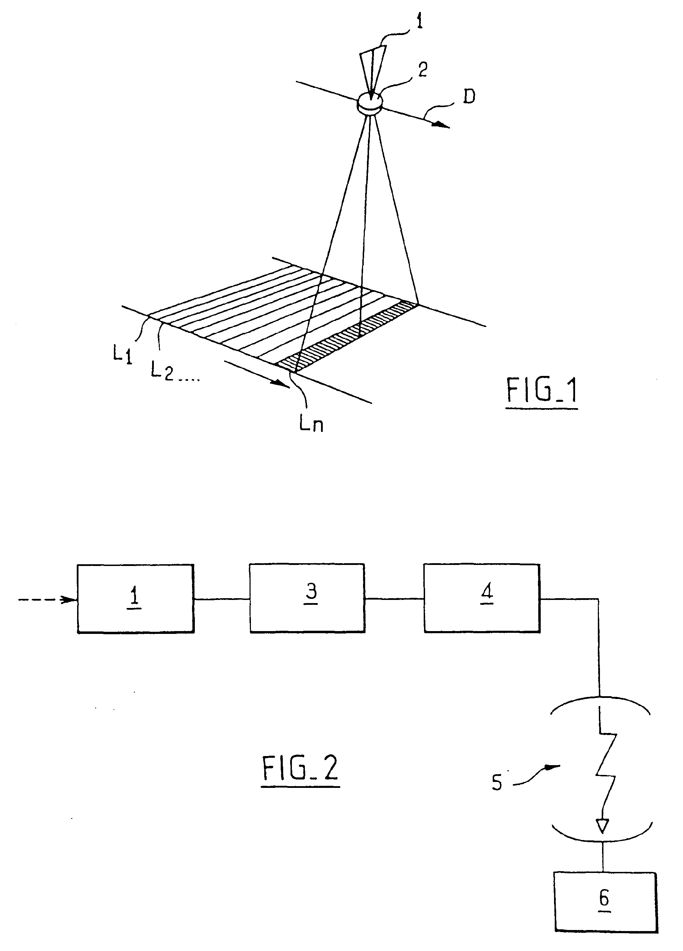

Le principe d'un balayage de type "pousse-balai" a été illustré sur le figure 1 dans le cas d'une barrette 1 de détecteurs.

La barrette 1 réalise l'observation successive, au cours du défilement du satellite qui la porte, de lignes L1, L2..., Ln perpendiculaires au déplacement (flèche D). Une optique 2 d'instrumentation forme à chaque instant l'image d'une ligne de paysage sur la ligne des détecteurs, la barrette 1 étant placée dans le plan focal de l'optique 2, perpendiculairement au vecteur vitesse du satellite. Le paysage défile devant chaque détecteur qui intègre le flux lumineux pendant le temps de pose et le transforme en une charge électrique proportionnelle.

On a illustré sur la figure 2 une chaîne de traitement classique des images ainsi relevées.

Cette chaîne de traitement comporte de façon schématique une unité 3 de traitement et d'amplification en sortie des détecteurs de la barrette 1, un codeur 4 analogique-numérique recevant le signal en sortie de l'unité 3, des moyens 5 pour la transmission au sol à partir du satellite des images numérique ainsi relevées, une unité 6 pour la reconstitution au sol des images.

L'unité 3 comporte en particulier un registre à décalage dans lequel les informations intégrées et stockées dans chaque détecteur de la barrette 1 sous forme de charge sont transférées à l'issue d'un temps de pose, ce registre assure ensuite un transfert électronique des charges, qui sont converties en une succession de tensions proportionnelles aux flux lumineux reçus et intégrés.

L'unité 6 au sol reconstruit les images en mettant notamment en oeuvre des traitements de déconvolution destinés à compenser les défauts instrumentaux, ainsi que le cas échéant des traitements d'interpolation pour reconstituer certains pixels de l'image.

ETAT DE LA TECHNIQUE ET BUT DE L'INVENTION

On sait que plus on affine la résolution d'une image, plus le rapport signal à bruit (SNR) a tendance à diminuer - du fait notamment du manque de flux - de sorte que les images ne sont plus acceptables.

Or, les solutions connues à ce jour pour pallier cet inconvénient ne sont pas satisfaisante.

Notamment, une solution possible consiste à augmenter les dimensions instrumentales, et notamment le diamètre pupillaire du télescope. Mais cette solution est par nature coûteuse.

Une autre solution encore consiste à piloter l'attitude du satellite de façon à ralentir son balayage. Cette technique permet une intégration plus longue en flux, mais implique la perte de la continuité sous trace du satellite et par conséquent conduit à une perte de données.

Une troisième solution encore consiste à utiliser des détecteurs spécifiques à décalage d'intégration (également appelés TDI ou "Time Delay Integrated" selon la terminologie anglo-saxonne généralement utilisée). Ces détecteurs sont constitués selon des matrices dont les lignes sont décalés électroniquement, de façon à compenser la vitesse du satellite. Toutefois, un tel système est d'une réalisation et d'une mise en oeuvre complexes. En outre, il ne permet pas de réaliser des échantillonnages adaptés à la fonction de transfert de modulation pour que le repliement spectral soit négligeable et le débit d'acquisition optimisé.

L'invention a donc pour but de proposer un procédé d'acquisition de ce type dans lequel le bruit instrumental est réduit et qui ne présente pas les inconvénients des solutions précitées.

GENERALITES THEORIQUES

On sait que l'acquisition d'une image par balayage pousse-balai peut être modélisée linéairement par le formalisme :

$$I_b = \Pi_p (h \otimes O + b)$$

où $\otimes$ désigne l'opération de convolution,
O le paysage dont on souhaite acquérir une image,

h le filtre à réponse impulsionnelle de l'instrument,

b le bruit qui se superpose au paysage filtré,

$I_b$ l'image brute,

$\Pi_p$ est un peigne de Dirac en deux dimensions qui indique que l'image continue est discrétisée.

L'image est numérique et codée sur un nombre de bits limité La représentation spectrale est souvent préférée. Elle se formalise par la Transformée de Fourier (TF) de l'image brute, soit

$$\hat{I}_b = \Pi_p \otimes (FTM.\hat{O} + b)$$

où les chapeaux indiquent qu'il s'agit des Transformées de Fourier et où l'abréviation FTM désigne la Fonction de Transfert de Modulation, qui est la transformée de Fourier de la réponse impulsionnelle. En représentation spectrale, l'opération de convolution est équivalente à l'opération multiplicative.

Les paramètres intervenant principalement dans les formules précédentes sont précisés ci-dessous.

*Fonction de Transfert de Modulation ou FTM*

La FTM exprime le facteur d'atténuation des fréquences spatiales. Plus les fréquences sont élevées plus la FTM est faible. Le lieu géométrique où la FTM s'annule est la frontière de coupure instrumentale. Le support spectral instrumental est quant à lui le domaine de basse fréquence limité par la frontière de coupure instrumentale.

La FTM d'un l'instrument est le produit de la FTM de son optique par la FTM de son détecteur et par la FTM du filé suivant la direction de déplacement.

*Bruit*

Le bruit instrumental est toujours présent. Une approche simplifiée consiste à considérer qu'il est caractérisé par le SNR moyen (généralement connu dès que la mission du satellite est définie) et que le bruit photonique de type Poissonnien est prépondérant à l'aluminance moyenne par rapport aux autres bruits. Pour une telle distribution, l'écart type du bruit varie comme la racine carrée du nombre de photons N recueillis par le détecteur. Par conséquent :

$$SNR = \sqrt{N}\ .$$

*Réseau d'échantillonnage.*

Les satellites actuels génèrent un réseau orthogonal carré (vitesse et barrette ont des directions orthogonales). Le pas d'échantillonnage suivant la direction de la vitesse au sol est $\Delta\tau$ = v.te (où v est la vitesse du satellite et te le temps d'échantillonnage) et celui suivant la direction de la barrette est égal à la distance entre deux CCD élémentaires adjacents. Par conséquent, avec les réseaux mis en oeuvre parles satellites actuels, les deux pas sont égaux et les projections des pixels au sol ne se recouvrent pas (le sol n'est balayé qu'une seule fois).

Toutefois, dans le cas des acquisitions réalisées avec les satellites actuels, la fréquence d'échantillonnage est égale à la fréquence de coupure de sorte que la condition de Shannon (te<1/2fc, où fc est la fréquence de coupure) n'est pas respectée. Il en résulte un fort repliement de spectre introduisant des artéfacts et rendant difficile toute tentative de déconvolution et d'interpolation.

Pour pallier cet inconvénient, il a récemment été proposé, notamment dans le brevet FR 2.678.460 de la demanderesse, une technique permettant, au moyen de deux barrettes décalées, de réaliser un suréchantillonnage limitant le repliement du spectre.

Il a également été proposé par la demanderesse, dans sa demande de brevet WO 97/05451, des techniques permettant de réaliser un suréchantillonnage en quinconce adapté à la fonction de transfert de modulation de l'instrument de façon à permettre un repliement spectral négligeable tout en optimisant le débit d'acquisition.

PRESENTATION DE L'INVENTION

L'invention propose quant à elle une solution instrumentale qui permet d'obtenir des images sur lesquelles d'une part le repliement du spectre est limité et d'autre part le bruit est minimisé.

Plus particulièrement, l'invention propose un procédé d'acquisition et de traitement d'une image d'observation satellitaire de la terre au moyen d'au moins une barrette ou une matrice de détecteurs de type à transfert de charge défilant en regard d'une zone observée, dans lequel on réalise une acquisition d'une pluralité de pixels selon un échantillonnage donné, caractérisé en ce que le réseau de cet échantillonnage inclut «n» sous réseaux correspondant à un échantillonnage vérifiant la condition de Shannon, ou «n» est un nombre entier supérieur à 1, et en ce qu'on met en oeuvre un traitement permettant d'interpoler une image débruitée dont la résolution correspond à celle d'un sous-réseau d'échantillonnage à partir des pixels de l'image initialement acquise en ce que la barrette ou matrice de détecteurs est orientée, par rapport à la projection dans le plan focal où elle se trouve de la direction de déplacement du satellite, avec

un angle $\alpha$ vérifiant $\alpha = arctg(\frac{1}{n})$, et en ce que le pas d'échantillonnage dans ladite direction de déplacement est égale à $p\sqrt{1+n^2}/2n$, où p est le pas entre deux détecteurs élémentaires de la barrette ou matrice.

En d'autres termes, l'image initiale est équivalente à «n» images correspondant à des échantillonnages vérifiant la condition de Shannon, avec lesquelles on reconstitue une nouvelle image de même résolution. Pour chaque pixel de cette nouvelle image, on dispose d'un flux "n" fois plus important que dans le cas d'une acquisition normale, de sorte que le bruit moyen dans cette nouvelle image est divisé par [√n] par rapport à celui normalement obtenu pour une image de même résolution.

L'invention propose également un instrument de prise de vue pour la mise en oeuvre de ce procédé.

PRESENTATION DES FIGURES

D'autres caractéristiques et avantages de l'invention ressortiront encore de la description qui suit. Cette description est purement illustrative et non limitative. Elle doit être lue en regard des dessins annexés sur lesquels :

- la figure 1, déjà discutée, illustre le principe d'une acquisition par balayage pousse-balai ;
- la figure 2, également déjà discutée, illustre une chaîne de traitement d'images relevées par balayage pousse-balai ;
- les figures 3 et 4 sont des représentations schématiques illustrant un mode de mise en oeuvre possible de l'invention avec une barrette de détecteurs ;
- la figure 5 illustre un autre mode de mise en oeuvre possible de l'invention avec une double barrettes de détecteurs ;
- la figure 6 illustre un mode de mise en oeuvre possible de l'invention avec une matrice de détecteurs ;
- les figures 7 et 8 illustrent deux exemples d'organisations de barrettes qui peuvent être utilisées pour augmenter le champ dans le cas d'une mise en oeuvre de l'invention avec des barrettes de détecteurs.

DESCRIPTION DE MODES DE MISES EN OEUVRE PARTICULIERS

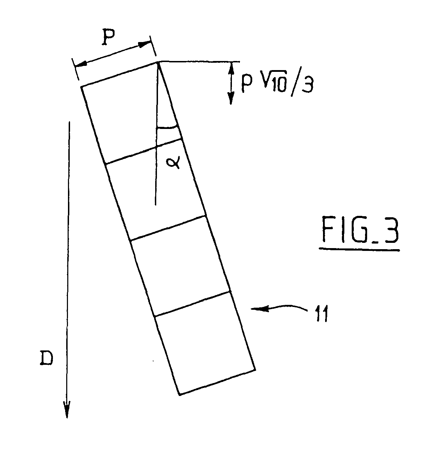

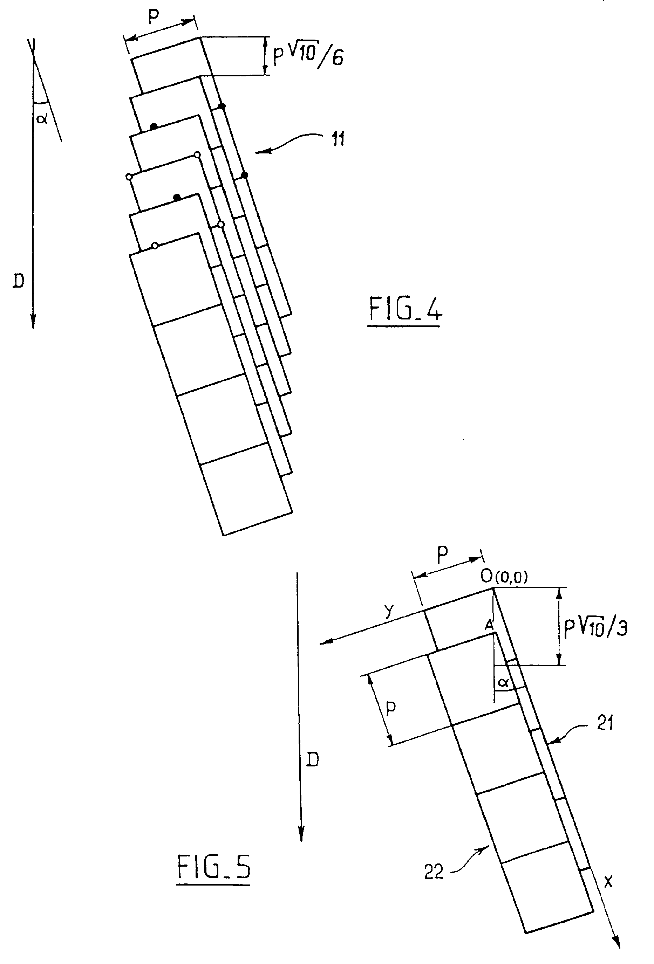

On a représenté sur les figures 3 et 4 une barrette linéaire 11 disposée dans le plan focal d'une instrumentation d'observation satellitaire, ainsi que la projection dans ce plan focal de la direction de déplacement D du satellite qui transporte cette barrette 11.

Cette barrette 11 est orientée dans ledit plan focal de façon à former avec la direction D un angle $\alpha$ égal à arctg(1/3).

Le pas $\Delta\tau$ d'échantillonnage selon la direction de déplacement D est quant à lui égal à $p\sqrt{10}/6$, où p est le pas entre deux détecteurs élémentaires de la barrette 11.

Un tel échantillonnage est équivalent à l'acquisition de trois images par un échantillonnage quinconces à la condition de Shannon, c'est à dire par exemple de trois images obtenues par un échantillonnage du type de ceux qui ont été décrits dans la demande de brevet WO 97/05451 de la demanderesse.

Par conséquent, avec l'échantillonnage qui est illustré sur les figures 3 et 4, il est possible d'obtenir après interpolation, par exemple en additionnant les trois images précitées correspondant à un échantillonnage en quinconce ou encore en mettant en oeuvre un traitement du type de celui qui est décrit plus loin plus en détails, une nouvelle image dont la résolution correspond à celle obtenue avec un échantillonnage quinconce, mais dont le bruit est divisé par √3 par rapport au bruit d'une image habituellement obtenue avec un tel échantillonnage.

De façon plus générale, un échantillonnage réalisé avec une barrette 11 orientée par rapport à la direction D

avec un angle $\alpha$ égal à $\alpha = arctg(\frac{1}{n})$, où n est un entier, et mettant en oeuvre un pas d'échantillonnage égal à $p\sqrt{1+n^2}/2n$ dans ladite direction D, est équivalent à l'acquisition de n images au moyen d'un échantillonnage quinconce à la condition de Shannon et permet, par interpolation, d'obtenir une image dont la résolution correspond à celle d'un tel échantillonnage quinconce, mais dont le bruit est divisé par $\sqrt{n}$.

D'autres variantes de réalisation sont bien entendu envisageables. Notamment, ainsi qu'illustré sur la figure 5, on peut utiliser dans l'instrument de prise de vue deux barrettes linéaires 21 et 22 avec un même pas p entre leurs détecteurs élémentaires.

Ces deux barrettes 21 et 22 sont orientées avec un angle $\alpha = arctg(\frac{1}{n})$ par rapport à la direction D.

Elles sont disposées dans l'instrument de prise de vue selon une configuration où elles sont décalées de p/2 dans la direction selon laquelle elles s'étendent (direction x) et de p/2n + Kp/n dans la direction perpendiculaire (direction y), K étant un entier quelconque adaptable à l'encombrement de l'instrument dans le plan focal.

Pour un pas d'échantillonnage égal à $\Delta\tau = p\sqrt{n^2+1}/n$, on réalise une acquisition qui est équivalente à l'acquisition de n images quinconces à la condition de Shannon. Par conséquent, en interpolant ces sous-images, on obtient une image qui est de même résolution et dont le bruit est divisé par $\sqrt{n}$ par rapport à celui normalement obtenu avec cette résolution.

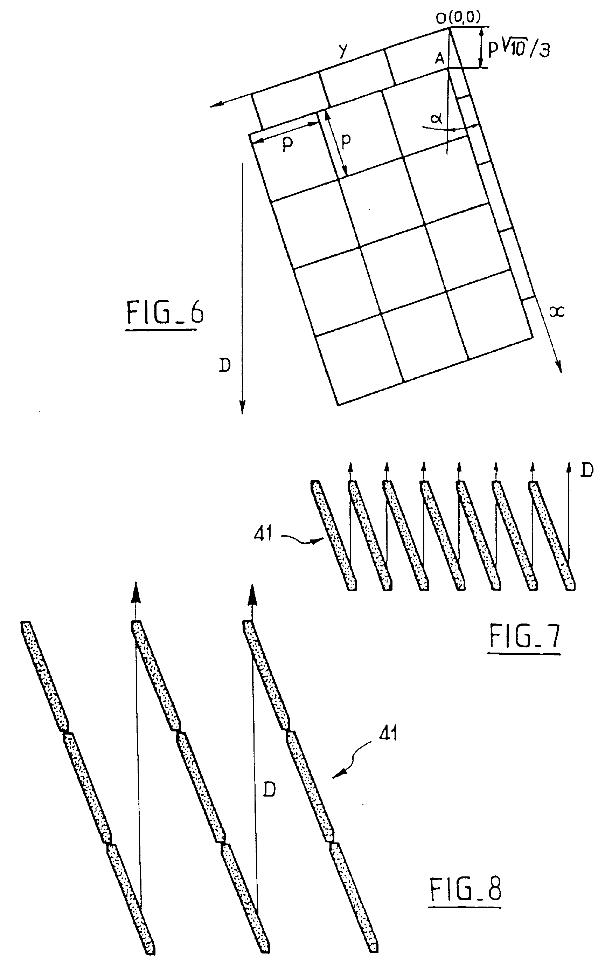

Egalement, ainsi que l'illustre la figure 6, les solutions qui viennent d'être précédemment décrites dans le cas de barrettes linéaires peuvent être généralisées à des matrices dont les lignes sont orientées d'un angle $\alpha = arctg(\frac{1}{n})$ par rapport à la direction D. Dans le cas d'une seule matrice, on utilise un pas d'échantillonnage dans la direction de déplacement égal à $p\sqrt{1+n^2}/2n$. On peut également utiliser deux matrices décalées et un pas d'échantillonnage dans la direction de déplacement égal à $p\sqrt{1+n^2}/n$.

Par rapport aux exemples décrits en référence aux figures 3 à 5 dans le cas de barrettes linéaires, on obtient des images dont le bruit est encore divisé par la racine carrée du nombre de lignes de la ou des matrices utilisées.

Que l'on utilise des matrices ou des barrettes, le traitement d'interpolation peut être réalisée au sol ou à bord. La réalisation à bord présente l'avantage de permettre une compression de l'image à transmettre par un facteur n.

Notamment, dans le cas où le sous-échantillonnage est de type carré, l'image interpolée peut être donnée par :

$$I(n_1, m_1) = \frac{1}{e}\sum_{u,v \in E} I_b(u.p1, v.p2)\sin c(\pi(\frac{u}{p1}-n_1))\sin c(\pi(\frac{v}{p2}-m_1)) \quad (2)$$

où E est le réseau suréchantillonné et $I_b$ l'image bruitée obtenue avec ce réseau,
où ($n_1$, $m_1$) est un couple de variables muettes correspondant aux coordonnées dans le réseau interpolé,
et où p1 et p2 sont les pas d'échantillonnages élémentaires dans le réseau E dont la direction selon laquelle la barrette s'étend et dans la direction perpendiculaire (ce qui implique notamment qu'ils vérifient l'équation

$$p1.p2 \: / \: p^2 = e,$$

où e est égal à n pour les cas décrits en référence aux figures 1 à 5.

De façon plus générale, pour des sous-images correspondant à un échantillonnage régulier quelconque, on mettra avantageusement l'interpolation suivante :

$$I(z) = \frac{1}{e}\sum_{z' \in E} I_b(z')\hat{R}0(z'-z)$$

où I est la fonction qui correspond à l'image interpolée, $I_b$ est la fonction qui correspond à l'image suréchantillonnée,

où z' appartient au réseau suréchantillonné E et z appartient au sous-réseau E0,

et où $\hat{R}0$ est la Transformée de Fourier inverse de la fonction caractéristique de R0 qui est la cellule réciproque de E0.

En variante, l'interpolation peut encore simplement consister à additionner les pixels des sous réseaux d'échantillonnage, (après avoir interpolé chaque image de façon à faire coïncider les pixels).

Par ailleurs, comme on l'aura compris, la technique qui vient d'être décrite en référence aux figures 3 à 6, si elle permet plus de flux pour chaque pixel, et donc une image moins bruitée, entraîne en contre-partie une perte de champ.

Cette perte en fauchée peut être compensée par l'ajout de barrettes dans le plan focal.

A cet effet, ainsi qu'illustré sur la figure 7, on peut disposer dans le plan focal une rangée constituée d'une pluralité de barrettes 41 parallèles et toutes inclinées d'un même angle $\alpha$ par rapport à la direction D.

On peut également, ainsi qu'illustré sur la figure 8, utiliser plusieurs rangées de barrettes 41 superposées.

**Revendications**

1. Procédé d'acquisition et de traitement d'une image d'observation satellitaire de la terre au moyen d'au moins une barrette ou une matrice de détecteurs de type à transfert de charge défilant en regard d'une zone observée, dans lequel on réalise une acquisition d'une pluralité de pixels selon un échantillonnage donné, **caractérisé en ce que** le réseau de cet échantillonnage inclut «n» sous réseaux correspondant à un échantillonnage vérifiant la condition de Shannon, où «n» est un nombre entier supérieur à 1, **en ce qu'**on met en oeuvre un traitement permettant d'interpoler une image débruitée dont la résolution correspond à celle d'un sous-réseau d'échantillonnage à partir des pixels de l'image initialement acquise,

   **en ce que** la barrette ou matrice de détecteurs est orientée, par rapport à la projection dans le plan focal où elle se trouve de la direction de déplacement du satellite, avec un angle $\alpha$ vérifiant $\alpha = arctg(\frac{1}{n})$,

   et **en ce que** le pas d'échantillonnage dans ladite direction de déplacement est égal à $p\sqrt{1+n^2}/2n$, où p est le pas entre deux détecteurs élémentaires de la barrette ou matrice.

2. Procédé selon la revendication 1, **caractérisé en ce que** l'image est acquise au moyen de deux barrettes ou matrices orientées avec un angle $\alpha$ vérifiant $\alpha = arctg(\frac{1}{n})$ par rapport à la projection dans le plan focal de la direction de déplacement du satellite, **en ce que** ces deux barrettes ou matrices sont décalées de p/2 dans la direction selon laquelle elles s'étendent et de p/2n + Kp/n dans la direction perpendiculaire, où K est un entier et où p est le pas entre deux détecteurs élémentaires sur chacune desdites barrettes et **en ce que** le pas d'échantillonnage dans la direction de déplacement est égale à $p\sqrt{1+n^2}/n$.

3. Procédé selon l'une des revendications précédentes, **caractérisé en ce que** pour interpoler l'image débruitée, on additionne les pixels des sous réseaux d'échantillonnage.

4. Procédé selon l'une des revendications 1 à 3, **caractérisé en ce que** le traitement d'interpolation consiste à déterminer

$$I(z) = \frac{1}{m} \sum_{z' \in E} I_b(z')\hat{R}0(z'-z)$$

où I est la fonction qui correspond à l'image interpolée, $I_b$ est la fonction qui correspond à l'image initiale,

où E est le réseau de l'image initiale et E0 le sous réseau de l'image interpolée,

et où $\hat{R}0$ est la Transformée de Fourier inverse de la fonction caractéristique de R0 qui est la cellule réciproque de E0.

5. Procédé selon la revendication 5, **caractérisé en ce que** dans le cas où l'échantillonnage des sous réseaux est de type carré, le traitement d'interpolation consiste à déterminer :

$$I(n_1, m_1) = \frac{1}{\ell_m} \sum_{u,v \in E} I_b(u.p1, v.p2) \sin c(\pi(\frac{u}{p1} - n_1)) \sin c(\pi(\frac{v}{p2} - m_1))$$

où $I_b$ est la fonction qui correspond à l'image initiale et E est le réseau de l'image initiale,

où $(n_1, m_1)$ est un couple de variables muettes correspondant aux coordonnées dans le réseau interpolé,

et où p1 et p2 sont les pas d'échantillonnages élémentaires dans le réseau E dans la direction selon laquelle la barrette ou matrice s'étend et dans la direction perpendiculaire.

6. Instrument de prise de vue pour la mise en oeuvre du procédé selon l'une des revendications précédentes, **caractérisé en ce qu'**il comporte une barrette ou matrice de détecteurs orientée avec un angle $\alpha = arctg(\frac{1}{n})$, où n est un entier supérieur a 1, par rapport à la projection dans le plan focal de la direction de déplacement du satellite, le pas d'échantillonnage dans ladite direction de déplacement étant égal à $p\sqrt{1+n^2}/2n$, où p est le pas entre deux détecteurs élémentaires de la barrette ou matrice.

7. Instrument selon la revendication 7, **caractérisé en ce qu'**il comporte au moins une rangée de barrettes ou de matrices de ce type s'étendant parallèlement.

8. Instrument selon l'une des revendications 7 ou 8, pour la mise en oeuvre du procédé selon la revendication 2, **caractérisé en ce qu'**il comporte deux barrettes orientées avec un angle $\alpha$ vérifiant $\alpha = arctg(\frac{1}{n})$ par rapport à la projection dans le plan focal de la direction de déplacement du satellite, et **en ce que** ces deux barrettes sont décalées de p/2 dans la direction selon laquelle elles s'étendent et de p/2n + Kp/n dans la direction perpendiculaire, où K est un entier et où p est le pas entre deux détecteurs élémentaires sur chacune desdites barrettes.

## Claims

1. A method of acquiring and processing a satellite observation image of the earth by means of at least one strip or matrix of detectors of the charge coupled device type, said detectors travelling over the observed zone, in which a plurality of pixels are acquired in a given sampling, the method being **characterized in that** the array of said sampling includes "n" subarrays corresponding to sampling satisfying Shannon's condition, where "n" is an integer greater than 1, **in that** processing is implemented that enables a noise-reduced image to be interpolated at a resolution corresponding to that of a sampling surarray on the basis of the initially acquired image pixels, **in that** the strip or matrix of detectors is oriented relative to the projection of the travel direction of the satellite on the focal plane containing the detectors at an angle $\alpha$, where $\alpha = \arctan(1/n)$, and **in that** the sampling pitch in said travel direction is equal to $p\sqrt{1+n^2}/2n$, where $\underline{p}$ is the pitch between two elementary detectors of the strip or matrix.

2. A method according to claim 1, **characterized in that** the image is acquired by means of two strips or matrices oriented at an angle $\alpha$, where $\alpha = \arctan(1/n)$, relative to the projection of the satellite displacement direction on the focal plane, **in that** the two strips or matrices are offset by p/2 in the direction in which they extend and by p/2n + Kp/n in the direction perpendicular thereto, where K is an integer and where p is the pitch between two elementary detectors in each of said strips, and **in that** the sampling pitch in the travel direction is equal to $p\sqrt{1+n^2}/2n$.

3. A method according to any preceding claim, **characterized in that** to interpolate the noise-reduced image, the pixels of the sampling subarrays are added together.

4. A method according to any one of claims 1 to 2, **characterized in that** the interpolation processing consists in

determining:

$$I(z) = \frac{1}{n} \sum_{z' \in E} I_b(z') \hat{R0}(z'-z)$$

where I is the function corresponding to the interpolated image, $I_b$ is the function corresponding to the initial image;
where $\underset{\wedge}{E}$ is the array of the initial image and E0 is the subarray of the interpolated image; and
where $\hat{R0}$ is the inverse Fourier transform of the function characteristic of R0 which is the reciprocal cell of E0.

5.  A method according to claim 4, **characterized in that** when the sampling of the subarrays is of the square type, the interpolation processing consists in determining:

$$I(n_1, m_1) = \frac{1}{n} \sum_{u.v \in E} I_b(u.p1, v.p2) \, sinc(\pi(\frac{u}{p1} - n_1)) \, sinc(\pi(\frac{v}{p2} - m_1))$$

where $I_b$ is the function which corresponds to the initial image and E is the array of the initial image;
where $(n_1, m_1)$ is a pair of dummy variables corresponding to the coordinates in the interpolated array; and
where p1 and p2 are the elementary sampling pitches in the array E in the direction in which the strip or matrix extends and in the direction perpendicular thereto.

6.  A camera instrument for implementing the method according to any preceding claim, **characterized in that** it comprises a strip or matrix of detectors oriented at an angle $\alpha = \arctan(1/n)$, where $\underline{n}$ is an integer greater than 1, relative to the projection of the satellite travel direction in the focal plane, the sampling pitch in said travel direction being equal to $p\sqrt{1+n^2}/2n$, where $\underline{p}$ is the pitch between two elementary detectors of the strip or matrix.

7.  An instrument according to claim 6, **characterized in that** it includes at least one row of strips or matrices of said type extending in parallel.

8.  An instrument according to claim 6 or 7, for implementing the method according to claim 2, **characterized in that** it has two strips oriented at an angle $\alpha$, where $\alpha = \arctan(1/n)$, relative to the projection of the satellite travel direction in the focal plane, and **in that** the two strips are offset by p/2 in the direction in which they extend and by p/2n + Kp/n in the direction perpendicular thereto, where K is an integer and where $\underline{p}$ is the pitch between two elementary detectors in each of said strips.

**Patentansprüche**

1.  Verfahren zum Erfassen und Bearbeiten eines Satellitenbeobachtungsbildes der Erde mittels mindestens einer Leiste bzw. eines Arrays von Detektoren von der Art mit Ladungsübertragung, die bzw. das an einem beobachteten Bereich vorbeiläuft, wobei eine Erfassung einer Vielzahl von Pixeln gemäß einer bestimmten Abtastung vorgenommen wird, **dadurch gekennzeichnet, dass** das Raster dieser Abtastung "n" Nebenraster umfasst, die einer Abtastung entsprechen, welche den Shannonschen Satz erfüllt, wobei "n" eine ganze Zahl ist, die größer als 1 ist, und dass eine Bearbeitung durchgeführt wird, die es ermöglicht, ein entrauschtes Bild, dessen Auflösung derjenigen eines Abtastungsnebenrasters entspricht, ausgehend von den Pixeln des ursprünglich erfassten Bildes zu interpolieren, dass die Detektorleiste bzw. das Detektorarray im Verhältnis zu der Projektion in der Fokalebene, wo sie bzw. es sich befindet, von der Bewegungsrichtung des Satelliten, mit einem Winkel $\alpha$, der $\alpha = arctg\left(\dfrac{1}{n}\right)$

erfüllt, ausgerichtet ist, und dass der Abtastungsschritt in der Bewegungsrichtung gleich $p\sqrt{1+n^2}/2n$ ist, wobei p der Schritt zwischen zwei elementaren Detektoren der Leiste bzw. des Arrays ist.

2. Verfahren nach Anspruch 1, **dadurch gekennzeichnet, dass** das Bild mittels zweier Leisten bzw. Arrays erfasst wird, die in einem Winkel $\alpha$ ausgerichtet sind, der im Verhältnis zur Projektion in der Fokalebene der Bewegungsrichtung des Satelliten $\alpha = arctg\left(\dfrac{1}{n}\right)$ erfüllt, dass diese beiden Leisten bzw. Arrays in der Richtung, in der

sie sich erstrekken, um p/2 verschoben sind und in der rechtwinkligen Richtung um p/2n + Kp/n verschoben sind, wobei K eine ganze Zahl ist und wobei p der Schritt zwischen zwei elementaren Detektoren auf jeder der Leisten ist, und dass der Abtastungsschritt in der Bewegungsrichtung gleich $p\sqrt{1+n^2}/n$ ist.

3. Verfahren nach einem der vorhergehenden Ansprüche, **dadurch gekennzeichnet, dass** zum Interpolieren des entrauschten Bildes die Pixel der Abtastungsnebenraster zusammengezählt werden.

4. Verfahren nach einem der Ansprüche 1 bis 2, **dadurch gekennzeichnet, dass** die Interpolationsbearbeitung daraus besteht

$$I(z) = \frac{1}{n}\sum_{i\in E}I_b(z')\hat{R}0(z'-z)$$

zu bestimmen,
wobei I die Funktion ist, die dem interpolierten Bild entspricht, $I_b$ die Funktion ist, die dem ursprünglichen Bild entspricht,
wobei E das Raster des ursprünglichen Bildes und E0 das Nebenraster des interpolierten Bildes ist,
und wobei $\hat{R}0$ die Fourier-Rücktransformierte der charakteristischen Funktion von R0 ist, das die umgekehrte Zelle von E0 ist.

5. Verfahren nach Anspruch 4, **dadurch gekennzeichnet, dass** falls die Abtastung der Nebenraster quadratischer Art ist, die Interpolationsbearbeitung daraus besteht

$$I(n_1, m_1) = \frac{1}{n}\sum_{u,v\in E}I_b(u.p1, v.p2)\sin c\left(\pi\left(\frac{u}{p1} - n_1\right)\right)\sin c\left(\pi\left(\frac{v}{p2} - m_1\right)\right)$$

zu bestimmen,
wobei $I_b$ die Funktion ist, die dem ursprünglichen Bild entspricht, und E das Raster des ursprünglichen Bildes ist,
wobei $(n_1, m_1)$ ein Paar von stummen Variablen ist, die den Koordinaten in dem interpolierten Raster entsprechen,
und wobei p1 und p2 die elementaren Abtastungsschritte im Raster E in der Richtung, in der sich die Leiste bzw. das Array erstreckt, und in der senkrechten Richtung sind.

6. Bildaufnahmegerät zum Durchführen des Verfahrens nach einem der vorhergehenden Ansprüche, **dadurch gekennzeichnet, dass** es eine Leiste bzw. ein Array von Detektoren umfasst, die bzw. das in einem Winkel

$\alpha = arctg\left(\dfrac{1}{n}\right)$ ausgerichtet ist, wobei n eine ganze Zahl ist, die größer als 1 ist, im Verhältnis zur Projektion in der Fokalebene der Bewegungsrichtung des Satelliten, wobei der Abtastungsschritt in der Bewegungsrichtung gleich $p\sqrt{1+n^2}/2n$ ist, wobei p der Schritt zwischen zwei elementaren Detektoren der Leiste bzw. des Arrays ist.

7. Gerät nach Anspruch 6, **dadurch gekennzeichnet, dass** es mindestens eine Reihe von derartigen Leisten bzw. Arrays umfasst, die sich parallel erstrecken.

8. Gerät nach einem der Ansprüche 6 oder 7, zum Durchführen des Verfahrens nach Anspruch 2, **dadurch gekennzeichnet, dass** es zwei Leisten umfasst, die in einem Winkel $\alpha$ ausgerichtet sind, der $\alpha = arctg\left(\dfrac{1}{n}\right)$ im Verhältnis zur Projektion in der Fokalebene der Bewegungsrichtung des Satelliten erfüllt, und dass diese beiden Leisten in der Richtung, in der sie sich erstrecken, um p/2 verschoben sind und in der rechtwinkligen Richtung um p/2n + Kp/n verschoben sind, wobei K eine ganze Zahl ist und wobei p der Schritt zwischen zwei elementaren Detektoren auf jeder der Leisten ist.

FIG_1

FIG_2

FIG. 3

P

$P\sqrt{10}/6$

α

D

11

## FIG. 4

P

O(0,0)

y

A

$P\sqrt{10}/3$

α

P

D

21

22

x

## FIG. 5

FIG_6

FIG_7

FIG_8

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2678460

- WO 9705451 A